# FASCICULE DE BREVET EUROPEEN

(11) **EP 1 163 831 B1**
(45) Date de publication et mention de la délivrance du brevet: **27.10.2004**
(21) Numéro de dépôt: 01440157.4
(22) Date de dépôt: 07.06.2001
(51) Int. Cl.: A01C 19/04, A01B 73/00

(54) **Semoir**
Sämaschine
Sowing machine

(30) Priorité: 16.06.2000 FR 0007902
(43) Date de publication de la demande: 19.12.2001
(73) Titulaire: Kuhn-Nodet S.A., 77876 Montereau (FR)
(72) Inventeur: Constant, Olivier, 77130 Misy sur Yonne (FR)
(74) Mandataire: Andres, Jean-Claude

(56) Documents cités:
- EP-A- 0 981 941
- DE-A- 4 304 931
- US-A- 4 259 872

## Description

La présente invention se rapporte au domaine technique du machinisme agricole. Elle concerne plus particulièrement un dispositif d'entraînement du mécanisme de dosage d'un semoir, ledit dispositif comportant :
- une roue d'entraînement qui, lors du travail, roule sur le sol autour d'un axe de rotation,
- un dispositif de liaison qui relie ladite roue d'entraînement à un élément dudit semoir,
- des organes de transmission qui relient ladite roue d'entraînement audit mécanisme de dosage.

Un tel dispositif d'entraînement est connu du document US 4 259 872. En plus, la demanderesse fabrique et commercialise un semoir **(Prospectus INTEGRA 3000-4000 de KUHN-NODET)**. Cette machine connue comporte notamment une trémie soutenue par un châssis et disposée transversalement à une direction d'avance dudit semoir. Le fond de la trémie débouche sur plusieurs organes de dosage répartis sur toute la largeur de ladite trémie. A son tour, chaque organe de dosage débouche sur un soc respectif via une conduite d'acheminement. Pour leur part, les socs sont disposés sur une ou plusieurs rangées sensiblement perpendiculaires à ladite direction d'avance. Cette machine connue comporte également deux roues d'entraînement, de type "soleil", disposées respectivement à une extrémité latérale dudit semoir. L'axe de rotation de chaque roue est sensiblement horizontal et sensiblement perpendiculaire à la direction d'avance du semoir. Chaque roue est liée à un bras de roue respectif de sorte à pouvoir tourner autour de son axe de rotation. A son tour, chaque bras de roue est lié au châssis dudit semoir au moyen d'une articulation dont l'axe est sensiblement parallèle à l'axe de rotation de la roue correspondante.

Lors du travail, lesdites roues roulent sur le sol et entraînent, via des organes de transmission, les organes de dosage. Ainsi la semence, initialement contenue dans la trémie, est tout d'abord dosée puis implantée dans le sol par les socs.

Afin de respecter la réglementation en terme de largeur de transport lors de déplacements sur route, ce semoir connu nécessite le démontage des roues "soleil" de leur bras de roue respectif. Ces opérations répétitives de montage et de démontage des roues "soleil" engendrent, entre autres, une perte de temps considérable pour l'utilisateur.

Le but de la présente invention vise donc à remédier à cet inconvénient de l'état de la technique en réalisant un dispositif d'entraînement qui ne nécessite pas le démontage de la roue d'entraînement lors du transport du semoir sur la route.

L'objet assigné à la présente invention est atteint à l'aide d'un dispositif d'entraînement tel que décrit dans le préambule et qui est caractérisé par le fait que ledit dispositif de liaison comporte au moins une articulation qui permet à ladite roue d'entraînement d'être pivotée, pour le transport, vers un plan vertical médian dudit semoir.

En effet, ce pivotement de la roue d'entraînement vers l'intérieur du semoir permet avantageusement de ramener ledit semoir dans le gabarit de transport autorisé. De plus, cette manoeuvre est rapidement effectuée car elle ne nécessite aucune opération de montage-démontage.

D'autres caractéristiques de l'invention apparaîtront encore dans les sous-revendications et dans la description suivante d'un exemple de réalisation non limitatif de l'invention représenté sur les dessins annexés sur lesquels :
- la **figure 1** représente, vu de coté, un semoir conforme à l'invention,
- la **figure 2** représente, vu suivant la flèche I, les extrémités latérales du semoir de la figure 1,
- la **figure 3** représente, en vue de dessus, un dispositif d'entraînement conforme à l'invention,
- la **figure 4** représente, vu suivant la flèche II, le dispositif d'entraînement de la figure 3.

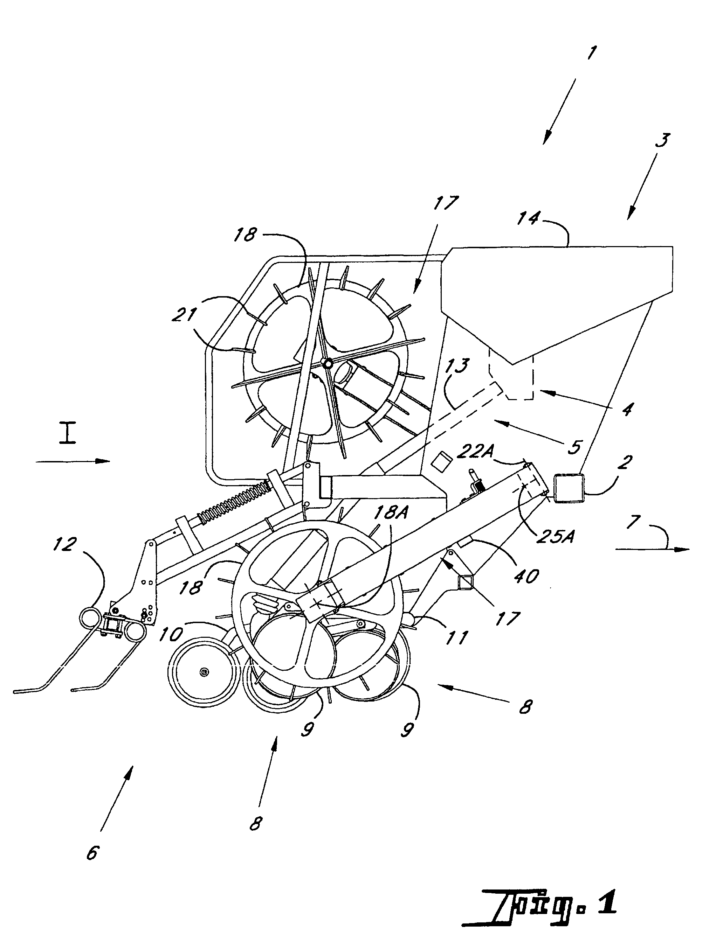

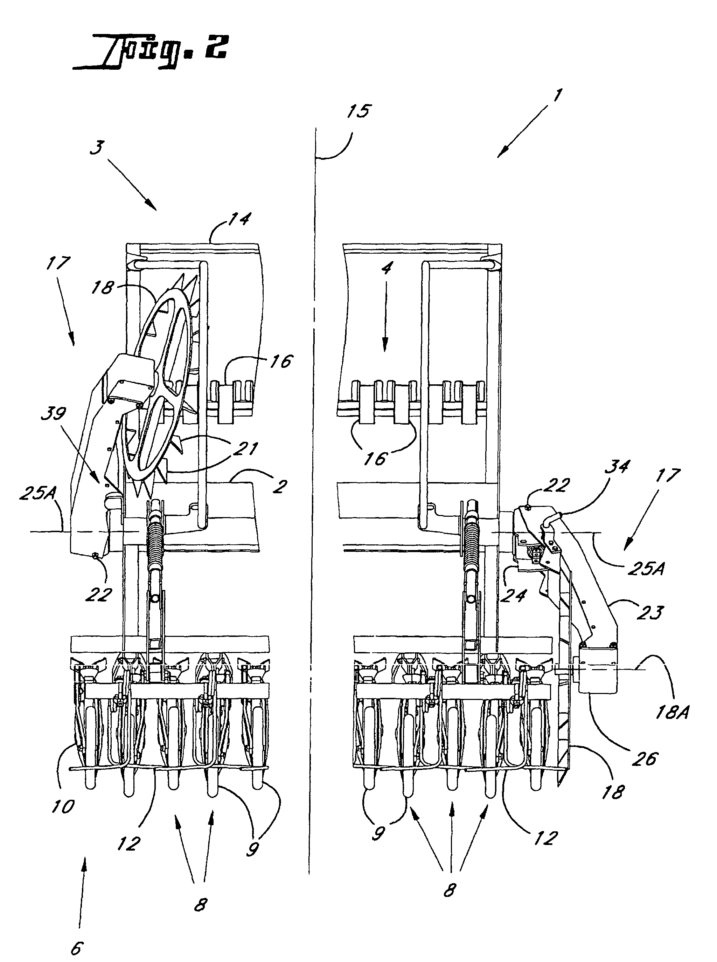

Le semoir (1) représenté sur les figures 1 et 2 comporte, d'une manière connue de l'homme du métier, un châssis (2), un dispositif de stockage (3), un mécanisme de dosage (4), un dispositif d'acheminement (5) et un dispositif d'implantation (6).

Lors du travail, ledit semoir (1) est déplacé, suivant une direction d'avance (7), sur un sol à ensemencer. La semence, initialement contenue dans ledit dispositif de stockage (3), est transportée jusqu'au dispositif d'implantation (6) au moyen dudit dispositif d'acheminement (5). Puis ladite semence est enfouie dans ledit sol au moyen dudit dispositif d'implantation (6). Le mécanisme de dosage (4), quant à lui, permet de régler précisément la quantité de semence déposée par hectare. Pour sa part, ledit châssis (2) permet de lier, directement ou indirectement, ledit semoir (1) à un véhicule tracteur (non représenté).

Dans l'exemple de réalisation représenté sur les figures 1 et 2, ledit dispositif de stockage (3) et ledit dispositif d'implantation (6) sont liés audit châssis (2). De plus, ledit châssis (2) est conçu pour être attelé à un outil de travail du sol (non représenté), lequel est à son tour lié audit véhicule tracteur. Une telle combinaison d'un outil de travail du sol et d'un semoir (1) est particulièrement avantageuse. En effet, elle permet de préparer le lit de semence et d'ensemencer en un seul passage du véhicule tracteur, d'où un gain de temps considérable. Ce type de semoir (1) est communément appelé "semoir intégré".

L'exemple de semoir (1), représenté sur les figures 1 et 2, est également du type "semoir en ligne". A cet effet, ledit dispositif d'implantation (6) comprend plusieurs éléments d'implantation (8). Lesdits éléments d'implantation (8) sont disposés à intervalle sensiblement régulier sur toute la largeur dudit semoir (1). D'une manière connue de l'homme du métier, chaque élément d'implantation (8) comporte un soc (9) et un bras de liaison (10). Chaque bras de liaison (10) est lié, à une extrémité, audit châssis (2) au moyen d'une articulation respective (11), et à une autre extrémité audit soc (9) correspondant. Lesdits bras de liaison (10) s'étendent vers l'arrière dudit semoir (1), compte tenu de ladite direction d'avance (7), et ils sont avantageusement de longueurs différentes. Ainsi, lesdits socs (9) sont disposés sur plusieurs rangées sensiblement perpendiculaires à ladite direction d'avance (7). Lesdites articulations (11), d'axe respectif sensiblement perpendiculaire à ladite direction d'avance (7), permettent avantageusement auxdits socs (9) de suivre les dénivellations du sol. Lors du travail, chaque soc (9) creuse un sillon dans le sol et il y dépose de la semence. Dans cet exemple de semoir (1), ledit dispositif d'implantation (6) comporte également une herse de recouvrement (12) disposée derrière lesdits socs (9), laquelle referme lesdits sillons après la dépose de semence.

Ledit semoir en ligne (1) est mécanique. Ainsi le transport de la semence dudit dispositif de stockage (3) jusqu'auxdits socs (9) s'effectue par gravité. A cet effet, ledit dispositif d'acheminement (5) comporte plusieurs conduites (13). Chaque conduite (13) débouche sur un soc (9) respectif. Afin de permettre auxdits socs (9) de suivre les dénivellations du sol, lesdites conduites (13) sont avantageusement télescopiques et articulées.

Dans l'exemple de réalisation représenté sur les figures 1 et 2, ledit dispositif de stockage (3) est constitué d'une trémie (14). Conformément au paragraphe précédent, ladite trémie (14) est liée avantageusement à la partie haute dudit châssis (2), tandis que lesdits socs (9) sont liés à la partie basse dudit châssis (2). Il apparaît sur la figure 1 que le fond de ladite trémie (14) débouche sur ledit mécanisme de dosage (4), lequel est relié auxdits socs (9) au moyen desdites conduites (13). A la lumière de la figure 2, on voit que ladite trémie (14) s'étend transversalement à ladite direction d'avance (7), de part et d'autre d'un plan vertical médian (15) dudit semoir (1). On peut également noter que ledit mécanisme de dosage (4) comporte plusieurs organes de dosage (16). Chaque organe de dosage (16) est disposé sous une ouverture respective (non représentée) pratiquée dans le fond de ladite trémie (14). Chaque conduite (13) dudit dispositif d'acheminement (5) est reliée à un organe de dosage respectif (16).

D'une manière connue de l'homme de l'art, chaque organe de dosage (16) comporte un cylindre (non représenté) muni de cannelures. Ledit cylindre est entraîné en rotation autour de son axe au moyen d'un dispositif d'entraînement (17). Le volume, engendré par lesdites cannelures lors de la rotation dudit cylindre, détermine la quantité de semence implantée dans le sol. Afin de garantir un dosage homogène, la vitesse de rotation desdits cylindres est avantageusement proportionnelle à la vitesse d'avance dudit semoir (1).

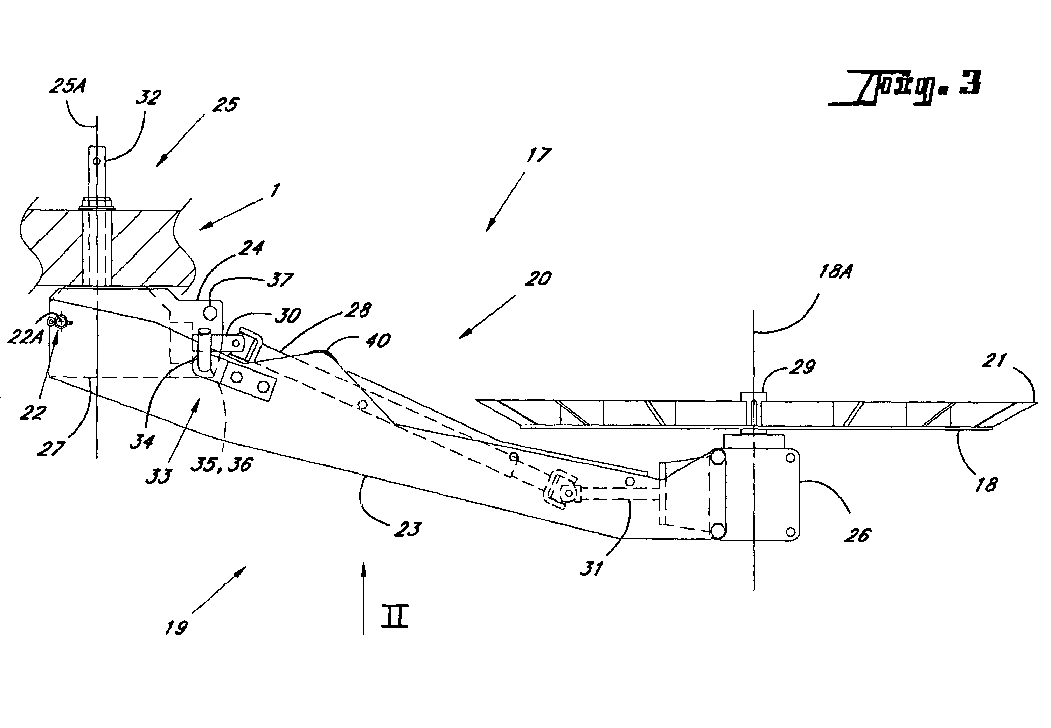

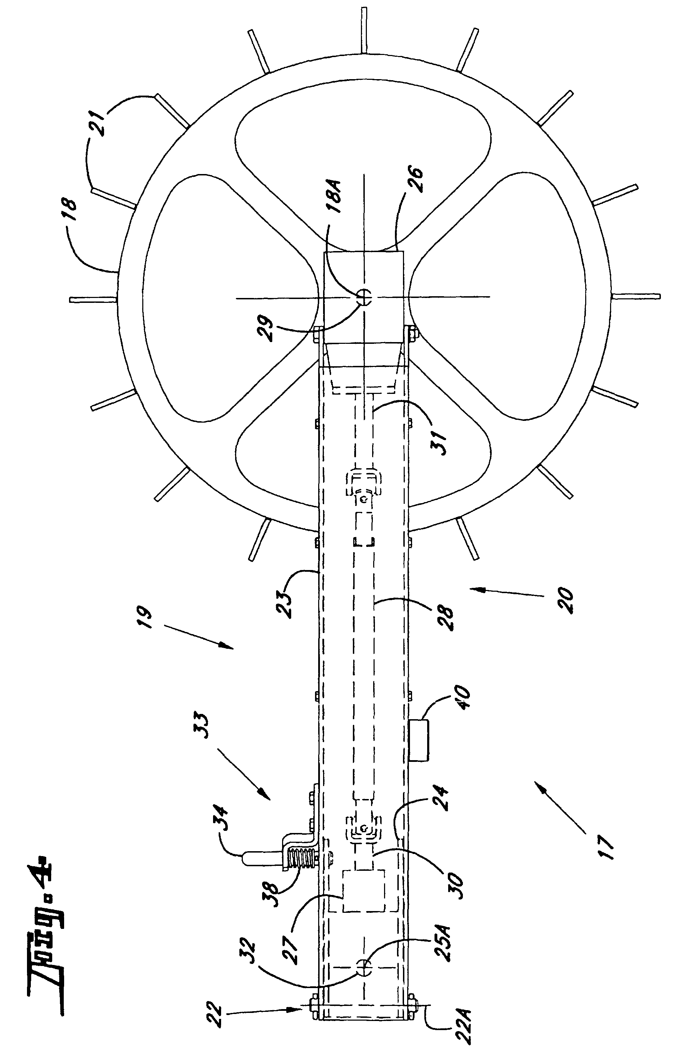

A cet effet, dans l'exemple de réalisation représenté sur les figures 3 et 4, ledit dispositif d'entraînement (17) comporte une roue d'entraînement (18) liée à un élément dudit semoir (1) au moyen d'un dispositif de liaison (19). Lors du travail, ladite roue (18) roule sur le sol autour d'un axe (18A) sensiblement horizontal et sensiblement perpendiculaire à ladite direction d'avance (7), et son mouvement de rotation est transmis audit mécanisme de dosage (4) au moyen d'organes de transmission (20). Afin de réduire les risques de sous-dosage dus au patinage de la roue (18) sur le sol, la périphérie de ladite roue (18) comporte avantageusement plusieurs pointes (21) dirigées radialement. Ce type de roue (18) est communément appelé "roue soleil".

Selon une caractéristique de la présente invention, ledit dispositif de liaison (19) comporte au moins une articulation (22) d'axe (22A) qui permet à ladite roue d'entraînement (18) d'être pivotée, lors du transport, vers ledit plan vertical médian (15) dudit semoir (1). Le but du pivotement de ladite roue d'entraînement (18) autour de ladite articulation (22) est de déplacer ladite roue (18), principalement suivant une direction perpendiculaire audit plan vertical médian (15), afin de réduire efficacement la largeur dudit semoir (1) lors du transport.

Dans un exemple de réalisation (non représenté), ledit dispositif de liaison (19) est lié audit semoir (1) au moyen de ladite articulation (22) dont l'axe (22A) est sensiblement vertical.

Dans un autre exemple de réalisation (non représenté), l'orientation dudit axe (22A) est telle que, lors du pivotement dudit dispositif de liaison (19) autour de ladite articulation (22), ladite roue d'entraînement (18) se déplace suivant une direction sensiblement verticale et suivant une direction sensiblement perpendiculaire audit plan vertical médian (15) (axe 22A incliné).

Dans l'exemple de réalisation représenté sur les figures 3 et 4, ledit dispositif de liaison (19) comporte d'une part un bras de roue (23) et d'autre part un élément de liaison (24). Ledit bras de roue (23) est lié, à une extrémité, à ladite roue d'entraînement (18). Une autre extrémité dudit bras de roue (23) est liée audit élément de liaison (24) au moyen de ladite articulation (22). Afin de remplir efficacement son rôle, l'axe (22A) de ladite articulation (22) est avantageusement compris dans un plan sensiblement parallèle audit plan vertical médian (15). Pour sa part, ledit élément de liaison (24) est lié à un élément dudit semoir (1) au moyen d'une deuxième articulation (25) d'axe (25A). Ledit axe (25A) est avantageusement sensiblement horizontal et sensiblement perpendiculaire à ladite direction d'avance (7). Ainsi lors du travail, ladite deuxième articulation (25) permet à ladite roue d'entraînement (18) de suivre parfaitement les dénivellations du sol.

Plus précisément, l'axe (22A) de ladite articulation (22) est avantageusement sensiblement perpendiculaire à un plan contenant ledit axe de rotation (18A) et ledit axe (25A) de ladite deuxième articulation (25). Il est également avantageux que l'axe (22A) de ladite articulation (22) soit relativement éloigné de l'axe de rotation (18A) de ladite roue d'entraînement (18). Ainsi un angle de pivotement, même relativement faible, dudit bras de roue (23) autour de ladite articulation (22) engendre un déplacement relativement important de ladite roue d'entraînement (18) vers ledit plan vertical médian (15). Afin de réduire les dimensions donc le poids dudit élément de liaison (24), il est par contre intéressant d'approcher l'axe (22A), de ladite articulation (22), de l'axe (25A) de ladite deuxième articulation (25). Enfin, il est également avantageux de disposer ledit axe de rotation (18A) et l'axe (22A) de ladite articulation (22) de part et d'autre dudit axe (25A) de ladite deuxième articulation (25).

A la lumière des figures 3 et 4, on peut voir que lesdits organes de transmission (20) sont notamment un premier carter de renvoi (26), un deuxième carter de renvoi (27) et un arbre de transmission à joints universels (28). Le premier carter de renvoi (26) et le deuxième carter de renvoi (27) comporte chacun un arbre d'entrée (29, 30) et un arbre de sortie (31, 32). D'une manière connue de l'homme du métier, chaque carter de renvoi (26, 27) comporte un couple conique (non représenté) respectif qui transmet le mouvement de rotation de l'arbre d'entrée (29, 30) à l'arbre de sortie correspondant (31, 32).

Ledit premier carter de renvoi (26) est lié audit bras de roue (23), et son arbre d'entrée (29) est lié à ladite roue d'entraînement (18). Pour sa part, l'axe de l'arbre de sortie (32) du deuxième carter de renvoi (27) est avantageusement sensiblement confondu avec l'axe (25A) de ladite deuxième articulation (25). De plus, ledit deuxième carter de renvoi (27) est avantageusement lié audit élément de liaison (24).

A noter que l'arbre d'entrée (30) dudit deuxième carter de renvoi (27) est entraîné en rotation par l'arbre de sortie (31) dudit premier carter de renvoi (26) au moyen dudit arbre de transmission (28). Pour ce faire, lors du travail, l'axe de l'arbre d'entrée (30) dudit deuxième carter de renvoi (27) est sensiblement parallèle à l'axe de l'arbre de sortie (31) dudit premier carter de renvoi (26). Afin de pallier aux variations, lors du passage de la position de transport à la position de travail et inversement, de la distance séparant ledit premier carter de renvoi (26) dudit deuxième carter de renvoi (27), ledit arbre de transmission (28) est avantageusement télescopique.

Dans l'exemple de réalisation représenté sur les figures 1 et 2, ledit semoir (1) comprend avantageusement deux dispositifs d'entraînement (17), tels que décrits ci-dessus, disposés respectivement à une extrémité latérale de ce dernier. D'une manière connue de l'homme du métier, lesdits organes de transmissions respectifs (20) sont liés audit mécanisme de dosage (4) au moyen d'une boîte de vitesses (non représenté) et d'une roue libre (non représentée). En entraînant plus ou moins vite ledit mécanisme de dosage (4), pour une même vitesse d'avance dudit semoir (1), ladite boîte de vitesses permet une première approche dans le réglage de la quantité de semence déposée. Ladite roue libre permet avantageusement d'entraîner ladite boîte de vitesse à partir de la roue (18) ayant la plus grande vitesse de rotation. Ceci est particulièrement intéressant lors du semis en courbe où on évite ainsi les phénomènes de sous-dosage dus à un entraînement par la roue (18) se trouvant à l'intérieur de ladite courbe.

Pour le besoin des figures 1 et 2, ledit dispositif d'entraînement (17) situé à gauche dudit semoir (1) est représenté en position de transport alors que ledit dispositif d'entraînement (17) situé à droite dudit semoir (1) est représenté en position de travail.

Concernant la figure 2, on comprendra que celle-ci représente, vu de l'arrière compte tenu de la direction d'avance (7), l'extrémité gauche et l'extrémité droite du semoir (1) de la figure 1. Ainsi l'extrémité droite du semoir (1), visible sur la figure 2, se trouve au premier plan sur la figure 1. Bien entendu, l'extrémité gauche du semoir (1), visible sur la figure 2, se trouve en arrière plan sur la figure 1. Pour plus de clarté, lesdites conduites (13) ainsi que l'arbre de transmission (28) dudit dispositif d'entraînement de droite (17) ne sont pas représentés sur cette figure.

A la lumière des figures 1 et 2, il apparaît que lesdits dispositifs d'entraînement (17) sont liés audit châssis (2) de manière sensiblement symétrique par rapport audit plan vertical médian (15) dudit semoir (1). Lors du travail, chaque dispositif d'entraînement (17) s'étend avantageusement vers l'arrière et vers le bas compte tenu de ladite direction d'avance (7). Ainsi ladite roue d'entraînement respective (18), laquelle évolue sur le sol sensiblement à coté dudit dispositif d'implantation (6), suit plus facilement les irrégularités du sol. Lors du transport, lesdits dispositifs d'entraînement (17) s'étendent également vers l'arrière, mais ils sont pivotés vers le haut autour de ladite deuxième articulation respective (25). De plus ils sont également pivotés, vers ledit plan vertical médian (15), autour de ladite articulation respective (22). Lesdites roues d'entraînement (18) se trouvent ainsi au-dessus dudit dispositif d'implantation (6). Elles ne constituent donc plus une gêne pour le transport sur route.

Afin de conserver sa position de transport ou sa position de travail, ledit dispositif d'entraînement (17) comporte en sus un dispositif de verrouillage (33). Dans l'exemple de réalisation représenté sur les figures, ledit dispositif de verrouillage (33) est destiné à arrêter la rotation de ladite roue d'entraînement (18) autour de ladite articulation (22) dans au moins une position de travail et au moins une position de transport. Plus précisément, ledit dispositif de verrouillage (33) comporte une poignée (34) qui translate suivant un axe sensiblement parallèle à l'axe (22A) de ladite articulation (22). Ladite poignée (34) coulisse dans un premier trou (35) traversant ledit bras de roue (23). Ledit élément de liaison respectif (24) comporte pour sa part, deux trous (36, 37). La disposition desdits trous (35, 36, 37) est avantageusement déterminée de façon à ce que, en position de travail, ledit premier trou (35) est aligné avec l'un des trous (36) dudit élément de liaison (24), et en position de transport, ledit premier trou (35) est aligné avec l'autre trou (37) dudit élément de liaison (24). Ainsi suivant la position dudit dispositif d'entraînement (17), ladite poignée (34) est coulissée dans ledit premier trou (35) et dans l'un des trous (36, 37) dudit élément de liaison (24). Ladite poignée (34) est maintenue verrouillée dans lesdits trous (35, 36, 37) au moyen d'un ressort (38). Sur la figure 3, ledit dispositif d'entraînement (17) est représenté en position de travail.

Comme vu précédemment, lors du travail ledit dispositif d'entraînement (17) peut pivoter librement autour de ladite deuxième articulation (25) afin de permettre à ladite roue d'entraînement respective (18) de suivre les irrégularités du sol. Par contre lors du transport, ladite roue (18) doit être maintenue à l'écart dudit sol. A cet effet, le pivotement dudit dispositif d'entraînement (17) autour de ladite deuxième articulation (25) est limitée, lors du transport, au moyen d'une butée (39). Ladite butée (39) comporte avantageusement un tampon (40) en élastomère qui vient s'appuyer contre ledit châssis (2).

Le dispositif d'entraînement (17) et le semoir (1) qui viennent d'être décrits, ne sont qu'un exemple de réalisation et d'utilisation qui ne saurait en aucun cas limiter le domaine de protection défini par les revendications suivantes.

En effet selon un autre exemple de réalisation non représenté, ledit châssis (2) est lié directement à un véhicule tracteur. Ainsi ledit semoir (1) peut être utilisé en solo.

Selon un autre exemple de réalisation non représenté, ledit dispositif d'implantation (6) n'est pas lié audit châssis (2) mais à un élément dudit outil de travail du sol.

Selon un autre exemple de réalisation non représenté, ledit semoir est de type pneumatique. Ledit dispositif d'acheminement (5) comporte donc, entre autres, plusieurs conduites souples et au moins une turbine créant le flux d'air nécessaire au transport de la semence entre le dispositif de stockage (3) et le dispositif d'implantation (6).

Selon un autre exemple de réalisation non représenté, ledit semoir (1) comporte un dispositif pour déposer, en même temps que la semence, un fertilisant ou un insecticide. Le dosage de la quantité de fertilisant ou d'insecticide déposé est réalisé au moyen d'un microgranulateur. Ledit microgranulateur peut être entraîné par le dispositif d'entraînement de la présente invention.

La présente invention concerne également les semoirs de type monograine.

## Revendications

1. Dispositif d'entraînement du mécanisme de dosage (4) d'un semoir (1), comportant :
- une roue d'entraînement (18) qui, lors du travail, roule sur le sol autour d'un axe de rotation (18A),
- un dispositif de liaison (19) qui relie ladite roue d'entraînement (18) à un élément dudit semoir (1),
- des organes de transmission (20) qui relient ladite roue d'entraînement (18) audit mécanisme de dosage (4),
***caractérisé par le fait que*** ledit dispositif de liaison (19) comporte au moins une articulation (22), d'axe (22A), qui permet à ladite roue d'entraînement (18) d'être pivotée, pour le transport, vers un plan vertical médian (15) dudit semoir (1).

2. Dispositif d'entraînement selon la revendication 1, ***caractérisé par le fait que*** ledit axe (22A) de ladite articulation (22) appartient à un plan sensiblement parallèle audit plan vertical médian (15).

3. Dispositif d'entraînement selon la revendication 1 ou 2, ***caractérisé par le fait que*** ledit dispositif de liaison (19) comporte un bras de roue (23) lié à ladite roue d'entraînement (18), et un élément de liaison (24) lié audit élément du semoir (1).

4. Dispositif d'entraînement selon la revendication 3, ***caractérisé par le fait que*** ledit bras de roue (23) est lié audit élément de liaison (24) au moyen de ladite articulation (22).

5. Dispositif d'entraînement selon la revendication 3 ou 4, ***caractérisé par le fait que*** ledit élément de liaison (24) est lié audit élément du semoir (1) au moyen d'une deuxième articulation (25).

6. Dispositif d'entraînement selon la revendication 5, ***caractérisé par le fait que*** ladite articulation (22) est disposée dans le voisinage de ladite deuxième articulation (25).

7. Dispositif d'entraînement selon la revendication 5 ou 6, ***caractérisé par le fait que*** ledit axe de rotation (18A) et l'axe (22A) de ladite articulation (22) sont disposées de part et d'autre dudit axe (25A) de ladite deuxième articulation (25).

8. Dispositif d'entraînement selon l'une des revendications 5 à 7, ***caractérisé par le fait que*** l'axe (22A) de ladite articulation (22) est sensiblement perpendiculaire à un plan contenant d'une part l'axe de rotation (18A), et d'autre part l'axe (25A) de ladite deuxième articulation (25).

9. Dispositif d'entraînement selon l'une des revendications 5 à 8, ***caractérisé par le fait que,*** lors du transport, la rotation de ladite roue d'entraînement (18) autour de ladite deuxième articulation (25) est limitée au moyen d'une butée (39).

10. Dispositif d'entraînement selon l'une des revendications 1 à 9, ***caractérisé par le fait qu***'il comporte en sus un dispositif de verrouillage (33) qui arrête le pivotement de ladite roue d'entraînement (18) autour de ladite articulation (22) dans au moins une position de transport et/ou au moins une position de travail.

11. Dispositif d'entraînement selon l'une des revendications 1 à 10, ***caractérisé par le fait que*** lesdits organes de transmission (20) se composent d'un premier carter de renvoi (26) muni d'un arbre d'entrée (29) et d'un arbre de sortie (31).

12. Dispositif d'entraînement selon la revendication 11, ***caractérisé par le fait que*** lesdits organes de transmission (20) comportent également un deuxième carter de renvoi (27) muni d'un arbre d'entrée (30) et d'un arbre de sortie (32).

13. Dispositif d'entraînement selon l'une des revendications 1 à 12, ***caractérisé par le fait que*** lesdits organes de transmission (20) comportent un arbre de transmission à joints universels (28).

14. Dispositif d'entraînement selon la revendication 13, ***caractérisé par le fait que*** ledit arbre de transmission (28) est télescopique.

15. Dispositif d'entraînement selon la revendication 11, ***caractérisé par le fait que*** ledit premier carter de renvoi (26) est lié audit dispositif de liaison (19).

16. Dispositif d'entraînement selon la revendication 11 ou 15, ***caractérisé par le fait que*** l'arbre d'entrée (29) dudit premier carter (26) est lié à ladite roue d'entraînement (18), et l'axe dudit arbre d'entrée (29) est sensiblement confondu avec ledit axe de rotation (18A).

17. Dispositif d'entraînement selon la revendication 12, ***caractérisé par le fait que*** ledit deuxième carter de renvoi (27) est lié audit dispositif de liaison (19).

18. Dispositif d'entraînement selon la revendication 12 ou 17, ***caractérisé par le fait que*** l'axe de l'arbre de sortie (32) dudit deuxième carter (27) est sensiblement confondu avec l'axe (22A ; 25A) de l'articulation (22 ; 25) liant ledit dispositif de liaison (19) audit élément du semoir (1).

19. Dispositif d'entraînement selon la revendication 12 en combinaison avec la revendication 13 ou 14, ***caractérisé par le fait que*** ledit arbre de transmission à joints universels (28) est lié d'une part à l'arbre de sortie (31) dudit premier carter de renvoi (26), et d'autre part à l'arbre d'entrée (30) dudit deuxième carter de renvoi (27).

20. Semoir agricole comportant :
- au moins un châssis (2),
- un dispositif de stockage (3) constitué d'au moins une trémie (14),
- un mécanisme de dosage (4) entraîné par au moins un dispositif d'entraînement (17) et comportant au moins un organe de dosage (16),
- un dispositif d'acheminement (5), et
- un dispositif d'implantation (6),
***caractérisé par le fait que*** le(s)dit(s) dispositif(s) d'entraînement (17) est(sont) tel(s) que défini(s) selon l'une des revendications 1 à 19.

21. Semoir selon la revendication 20, ***caractérisé par le fait qu***'il comporte deux dispositifs d'entraînement (17).

22. Semoir selon la revendication 21, ***caractérisé par le fait que*** chaque dispositif d'entraînement (17) est disposé à une extrémité latérale respective dudit semoir (1).

23. Semoir selon la revendication 21 ou 22, ***caractérisé par le fait que*** chaque dispositif de liaison (19) est lié audit châssis (2).

## Patentansprüche

1. Vorrichtung zum Antrieb des Dosiermechanismus (4) einer Sämaschine (1), die
- ein Antriebsrad (18), das im Betrieb um eine Drehachse (18A) über den Boden rollt,
- eine Verbindungsvorrichtung (19), die das Antriebsrad (18) mit einem Element der Sämaschine (1) verbindet,
- Kraftübertragungsglieder (20), die das Antriebsrad (18) mit dem Dosiermechanismus (4) verbinden,
umfasst, ***dadurch gekennzeichnet,* dass** die Verbindungsvorrichtung (19) mindestens ein Gelenk (22) mit einer Achse (22A) aufweist, das ein Schwenken des Antriebsrads (18) - für den Transport - um eine mittlere Vertikalebene (15) der Sämaschine (1) gestattet.

2. Antriebsvorrichtung nach Anspruch 1, ***dadurch gekennzeichnet,* dass** die Achse (22A) des Gelenks (22) zu einer Ebene gehört, die im Wesentlichen parallel zur mittleren Vertikalebene (15) verläuft.

3. Antriebsvorrichtung nach Anspruch 1 oder 2, ***dadurch gekennzeichnet,* dass** die Verbindungsvorrichtung (19) einen mit dem Antriebsrad (18) verbundenen Radarm (23) und ein mit dem Element der Sämaschine (1) verbundenes Verbindungselement (24) aufweist.

4. Antriebsvorrichtung nach Anspruch 3, ***dadurch gekennzeichnet,* dass** der Radarm (23) mittels des Gelenks (22) mit dem Verbindungselement (24) verbunden ist.

5. Antriebsvorrichtung nach Anspruch 3 oder 4, ***dadurch gekennzeichnet,* dass** das Verbindungselement (24) mittels eines zweiten Gelenks (25) mit dem Element der Sämaschine (1) verbunden ist.

6. Antriebsvorrichtung nach Anspruch 5, ***dadurch gekennzeichnet,* dass** das Gelenk (22) in der Nähe des zweiten Gelenks (25) angeordnet ist.

7. Antriebsvorrichtung nach Anspruch 5 oder 6, ***dadurch gekennzeichnet,* dass** die Drehachse (18A) und die Achse (22A) des Gelenks (22) auf beiden Seiten der Achse (25A) des zweiten Gelenks (25) angeordnet sind.

8. Antriebsvorrichtung nach einem der Ansprüche 5 bis 7, ***dadurch gekennzeichnet,* dass** die Achse (22A) des Gelenks (22) im Wesentlichen senkrecht zu der einerseits die Drehachse (18A) und andererseits die Achse (25A) des zweiten Gelenks (25) enthaltenden Ebene verläuft.

9. Antriebsvorrichtung nach einem der Ansprüche 5 bis 8, ***dadurch gekennzeichnet,* dass** die Drehung des Antriebsrads (18) um das zweite Gelenk (25) während des Transports mittels eines Anschlags (39) begrenzt wird.

10. Antriebsvorrichtung nach einem der Ansprüche 1 bis 9, ***dadurch gekennzeichnet,* dass** sie darüber hinaus eine Verriegelungsvorrichtung (33) aufweist, die das Schwenken des Antriebsrads (18) um das Gelenk (22) in mindestens einer Transportstellung und/oder mindestens einer Arbeitsstellung anhält.

11. Antriebsvorrichtung nach einem der Ansprüche 1 bis 10, ***dadurch gekennzeichnet,* dass** die Kraftübertragungsglieder (20) aus einem ersten Getriebegehäuse (26) bestehen, das mit einer Eingangswelle (29) und einer Ausgangswelle (31) versehen ist.

12. Antriebsvorrichtung nach Anspruch 11, ***dadurch gekennzeichnet,* dass** die Kraftübertragungsglieder (20) des Weiteren ein zweites Getriebegehäuse (27) aufweisen, das mit einer Eingangswelle (30) und einer Ausgangswelle (32) versehen ist.

13. Antriebsvorrichtung nach einem der Ansprüche 1 bis 12, ***dadurch gekennzeichnet,* dass** die Kraftübertragungsglieder (20) eine Kraftübertragungswelle (28) mit Kardangelenken umfassen.

14. Antriebsvorrichtung nach Anspruch 13, ***dadurch gekennzeichnet,* dass** die Kraftübertragungswelle (28) teleskopisch ist.

15. Antriebsvorrichtung nach Anspruch 11, ***dadurch gekennzeichnet,* dass** das erste Getriebegehäuse (26) mit der Verbindungsvorrichtung (19) verbunden ist.

16. Antriebsvorrichtung nach Anspruch 11 oder 15, ***dadurch gekennzeichnet,* dass** die Eingangswelle (29) des ersten Gehäuses (26) mit dem Antriebsrad (18) verbunden ist und die Achse der Eingangswelle (29) im Wesentlichen mit der Drehachse (18A) zusammenfällt.

17. Antriebsvorrichtung nach Anspruch 12, ***dadurch gekennzeichnet,* dass** das zweite Getriebegehäuse (27) mit der Verbindungsvorrichtung (19) verbunden ist.

18. Antriebsvorrichtung nach Anspruch 12 oder 17, ***dadurch gekennzeichnet,* dass** die Achse der Ausgangswelle (32) des zweiten Gehäuses (27) mit der Achse (22A; 25A) des Gelenks (22; 25), das die Verbindungsvorrichtung (19) mit dem Element der Sämaschine (1) verbindet, im Wesentlichen zusammenfällt.

19. Antriebsvorrichtung nach Anspruch 12 in Kombination mit Anspruch 13 oder 14, ***dadurch gekennzeichnet,* dass** die Kraftübertragungswelle (28) mit Kardangelenken einerseits mit der Ausgangswelle (31) des ersten Getriebegehäuses (26) und andererseits mit der Eingangswelle (30) des zweiten Getriebegehäuses (27) verbunden ist.

20. Landwirtschaftliche Sämaschine, die
- mindestens einen Rahmen (2),
- eine aus mindestens einem Trichter (14) bestehende Vorratsvorrichtung (3),
- einen durch mindestens eine Antriebsvorrichtung (17) angetriebenen Dosiermechanismus (4), mit mindestens einem Dosierglied (16),
- eine Zuführvorrichtung (5) und
- eine Ablagevorrichtung (6),
umfasst, ***dadurch gekennzeichnet,* dass** die Antriebsvorrichtung(en) (17) wie in einem der Ansprüche 1 bis 19 definiert ist (sind).

21. Sämaschine nach Anspruch 20, ***dadurch gekennzeichnet,* dass** sie zwei Antriebsvorrichtungen (17) aufweist.

22. Sämaschine nach Anspruch 21, ***dadurch gekennzeichnet,* dass** jede Antriebsvorrichtung (17) an einem seitlichen Ende bezüglich der Sämaschine (1) angeordnet ist.

23. Sämaschine nach Anspruch 21 oder 22, ***dadurch gekennzeichnet,* dass** jede Verbindungsvorrichtung (19) mit dem Rahmen (2) verbunden ist.

## Claims

1. Device for driving the metering mechanism (4) of a seed drill (1), comprising:
- a drive wheel (18) which, during operation, rolls along the soil about an axis of rotation (18A),
- a connection device (19) that connects the said drive wheel (18) to an element of the said seed drill (1),
- transmission members (20) that connect the said drive wheel (18) to the said metering mechanism (4),
***characterized in* that** the said connecting device 19) comprises at least one joint (22), of axis (22A), which allows the said drive wheel (18) to be pivoted, for transport purposes, towards a vertical central plane (15) of the said seed drill (1).

2. Drive device according to Claim 1, ***characterized in* that** the said axis (22A) of the said joint (22) belongs to a plane substantially parallel to the said vertical central plane (15).

3. Drive device according to Claim 1 or 2, ***characterized in* that** the said connecting device (19) comprises a wheel arm (23) connected to the said drive wheel (18), and a connecting element (24) connected to the said element of the seed drill (1).

4. Drive device according to Claim 3, ***characterized in* that** the said wheel arm (23) is connected to the said connecting element (24) by means of the said joint (22).

5. Drive device according to Claim 3 or 4, ***characterized in* that** the said connecting element (24) is connected to the said element of the seed drill (1) by means of a second joint (25).

6. Drive device according to Claim 5, ***characterized in* that** the said joint (22) is arranged in the vicinity of the said second joint (25).

7. Drive device according to Claim 5 or 6, ***characterized in* that** the said axis of rotation (18A) and the axis (22A) of the said joint (22) are arranged on either side of the said axis (25A) of the said second joint (25).

8. Drive device according to one of Claims 5 to 7, ***characterized in* that** the axis (22A) of the said joint (22) is substantially perpendicular to a plane containing on the one hand the axis of rotation (18A) and on the other hand the axis (25A) of the said second joint (25).

9. Drive device according to one of Claims 5 to 8, ***characterized in* that** during transport, the rotation of the said drive wheel (18) about the said second joint (25) is limited by means of a stop (39).

10. Drive device according to one of Claims 1 to 9, ***characterized in* that** it comprises in addition a locking device (33) which stops the pivoting of the said drive wheel (18) about the said joint (22) in at least one transport position and/or at least one working position.

11. Drive device according to one of Claims 1 to 10, ***characterized in* that** the said transmission members (20) are composed of a first gearbox (26) with an input shaft (29) and an output shaft (31).

12. Drive device according to Claim 11, ***characterized in* that** the said transmission members (20) also comprise a second gearbox (27) with an input shaft (30) and an output shaft (32).

13. Drive device according to one of Claims 1 to 12, ***characterized in* that** the said transmission members (20) comprise a transmission shaft with universal joints (28).

14. Drive device according to Claim 13, ***characterized in* that** the said transmission shaft (28) is telescopic.

15. Drive device according to Claim 11, ***characterized in* that** the said first gearbox (26) is connected to the said connection device (19).

16. Drive device according to Claim 11 or 15, ***characterized in* that** the input shaft (29) of the said first gearbox (26) is connected to the said drive wheel (18), and the axis of the said input shaft (29) substantially coincides with the said axis of rotation (18A).

17. Drive device according to Claim 12, ***characterized in* that** the said second gearbox (27) is connected to the said connection device (19).

18. Drive device according to Claim 12 or 17, ***characterized in* that** the axis of the output shaft (32) of the said second gearbox (27) substantially coincides with the axis (22A; 25A) of the joint (22; 25) connecting the said connection device (19) to the said element of the seed drill (1).

19. Drive device according to Claim 12 in combination with Claim 13 or 14, ***characterized in* that** the said transmission shaft with universal joints (28) is connected on the one hand to the output shaft (31) of the said first gearbox (26), and on the other hand to the input shaft (30) of the said second gearbox (27).

20. Agricultural seed drill comprising:
- at least one frame (2),
- a storage device (3) consisting of at least one hopper (14),
- a metering mechanism (4) driven by at least one drive device (17) and comprising at least one metering member (16),
- a conveying device (5), and
- a planting device (6),
***characterized in* that** the said drive device(s) (17) is (are) as defmed in one of Claims 1 to 19.

21. Seed drill according to Claim 20, ***characterized in* that** it comprises two drive devices (17).

22. Seed drill according to Claim 21, ***characterized in* that** each drive device (17) is located at a respective lateral end of the said seed drill (1).

23. Seed drill according to Claim 21 or 22, ***characterized in* that** each connection device (19) is connected to the said frame (2).
